# EUROPEAN PATENT SPECIFICATION

(11) **EP 4 061 653 B1**
(45) Date of publication and mention of the grant of the patent: **09.04.2025**
(21) Application number: 20820536.9
(22) Date of filing: 18.11.2020
(51) Int. Cl.: B60J 3/02, B60J 1/20

(54) **KIT FOR FIXING SUNSHIELDS**
BAUSATZ ZUR BEFESTIGUNG VON SONNENBLENDEN
KIT DE FIXATION DE PARE-SOLEIL

(30) Priority: 19.11.2019 IT 201900021543
(43) Date of publication of application: 28.09.2022
(73) Proprietor: ITI INDUSTRIALE S.r.L, 20016 Pero (MI) (IT); DAF Trucks N.V., 5643 TW Eindhoven (NL)
(72) Inventor: SCHIRALDI, Gaetano, 20016 Pero MI (IT); GREMO, Massimo, 20016 Pero MI (IT); VAN OIRSCHOT, Petrus Adrianus, 5643 TW Eindhoven (NL)
(74) Representative: Perani & Partners S.p.A.
(86) International application number: PCT/IB2020/060840
(87) International publication number: WO 2021/099946

(56) References cited:
- US-A- 5 056 853
- US-A1- 2007 120 390
- US-A1- 2009 039 669
- US-A1- 2018 361 835

## Description

### Technical field

The present invention relates to a kit for fixing vehicle sunshields according to the preamble of claim 1.

The purpose of these sunshields is to entirely or partially block the sunlight through the windows or the windscreen of the vehicles on which they are installed.

### Background art

In the prior art, different types of vehicles such as boats, buses, trucks or cars may be equipped with sunshields, which can be either motorized or manually operated. These sunshields typically comprise a pair of rods fixed inside the interior compartment of the vehicle, usually proximate the window or the portion of windscreen to be shielded. A roller is arranged between these rods, and is also stably fixed to the vehicle. A flexible screen is connected to the rods and is also wound around the roller, to be deployed by a simple pulling action. Therefore, the rods act as a guide for the screen, and stabilize it both during and after deployment.

During assembly, both the roller and the rods are generally fixed to the vehicle by means of screws or similar parts.

US 2018/361835 A1 shows a kit for fixing a vehicle sunshields according to the preamble of claim 1.

### Problem of the prior art

Nevertheless, this assembly method is somewhat problematic, especially for the rods. In particular, if the rods have to be screwed to the vehicle, there must be enough room to use a screwdriver, and this is not always possible.

The problem is even more apparent when disassembling the sunshield, and removing the rods. Here, the rod itself constitutes an obstacle and further hinders access to the fastening screws.

### SUMMARY OF THE INVENTION

In this context, the technical purpose of the present invention is to provide a kit for fixing vehicle sunshields that can obviate the aforementioned prior art drawbacks.

In particular, an object of the present invention is to provide a kit for fixing vehicle sunshields that can facilitate the operations of connecting and disconnecting the rods.

The aforementioned technical purpose and objects are substantially fulfilled by a kit for fixing vehicle sunshields that comprises the technical features as disclosed in one or more of the accompanying claims.

In particular, a kit for fixing vehicle sunshields of the present invention comprises a rod having at least one end and configured to allow a sunshield to slide thereon.

The kit further comprises a support adapted to be fixed to an interior compartment of a vehicle. This support has at least one socket configured to receive and firmly old the end of the rod.

The invention is according to claim 1.

This device solves the technical problem in that, with such interference-fit fixation the screwdriver and the fixing hardware are no longer needed. This results in easy fixation of the rod, even when narrow spaces are available.

### LIST OF DRAWINGS

Further features and advantages of the present invention will result more clearly from the illustrative, non-limiting description of a preferred, non-exclusive embodiment of a kit for fixing vehicle sunshields that, as shown in the annexed drawings, in which:
- Figure 1 is a schematic cross-sectional view of a kit for fixing vehicle sunshields according to a first embodiment of the present invention;
- Figure 2 is a cross-sectional view of a detail of the kit of Figure 1;
- Figure 3 is a perspective view of the detail of Figure 2;
- Figure 4 is a cross-sectional view of a detail of a kit for fixing vehicle sunshields according to a second embodiment of the present invention; and
- Figure 5 is a cross-sectional view of a detail of a kit for fixing vehicle sunshields according to a third embodiment of the present invention.

### DETAILED DESCRIPTION

Referring to the accompanying figures, a kit for fixing vehicle sunshields according to the invention will be now described.

Each curtain, not shown in the accompanying drawings, comprises a pair of rods 1 adapted to be fixed to the vehicle as further explained hereinbelow. A roller (not shown) is arranged between the rods 1. A screen (also not shown) is wound around the roller, and is connected in operation to the rods 1 to be guided by the rods 1 during deployment and retraction. The screen and the roller are well-known in the art and will not be further described herein.

The kit comprises at least one of the above described rods 1. This rod 1 having at least one end 2 and is configured to allow a sunshield to slide thereon.

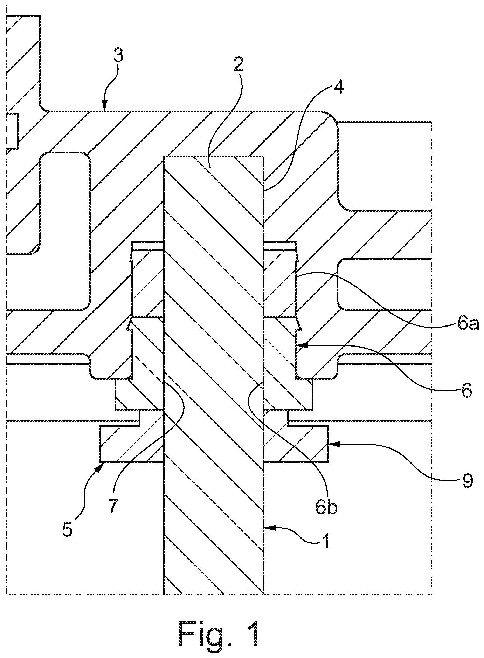

In the embodiment of Figure 1, the rod 1 preferably has a circular cross-section. In certain alternative embodiments, not shown, the rod 1 may have any sectional shape whatever.

More in detail, the rod 1 may be made of metal and/or plastic and/or a bicomponent with co-molded or mechanically engaged materials. The geometry of the rods may vary depending on the fastening points in the compartment, with a straight or specially formed profile. The rod 1 may also be a single piece or have a double-connection "U" shape.

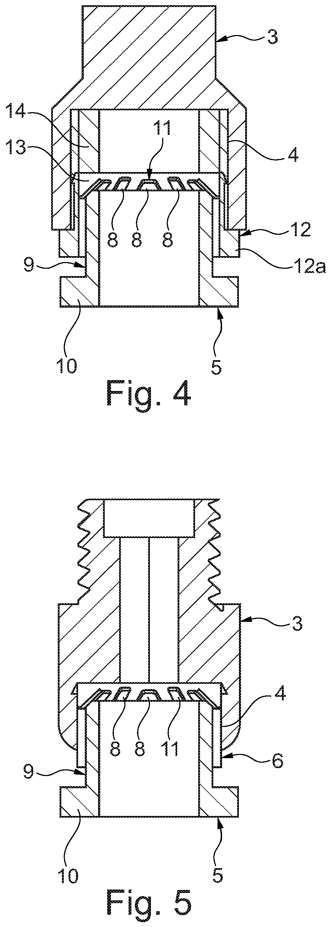

A support 3 is adapted to be fixed to an interior compartment of a vehicle. This support 3 has at least one socket 4 configured to receive and firmly hold the end 2 of the rod 1. In the embodiments of Figures 1 and 4, the support 3 is arranged to be also interlockingly fitted into the vehicle frame. However, in the embodiment of Figure 5, the support 3 is formed with threads 3a, whereby it can be screwed into position. Optionally, the support 3 may be omitted and the socket 4 may be formed directly in a suitable position in the vehicle.

According to the invention, the kit has connection means 5. The connection means 5 are configured to be placed between the rod 1 and the socket 4, to lock the rod 1 in the socket 4 by interference fit.

More in detail, the connection means 5 comprise a connector element 6, which is configured to be arranged coaxial with the rod 1, in particular at the end 2. The connector element 6 is adapted to be fixed inside the socket 4. In particular, the connector element 6 has an outer surface 6a and an inner surface 6b. The socket 4 is specifically shaped to mate the outer surface 6a. The inner surface 6b defines an additional socket 7 which is shaped to substantially mate the end 2 of the rod 1. In particular, the inner surface 6b is configured to grip the rod 1 and hold it by interference fit. 5. For this purpose, the inner surface 6b of the connector element has a plurality of projections 8.

It shall be noted that the connector element 6 may be mounted in the socket by various arrangements, e.g. by interference press fit and/or screwing by tapping the socket 4 and/or using a side screw (not shown).

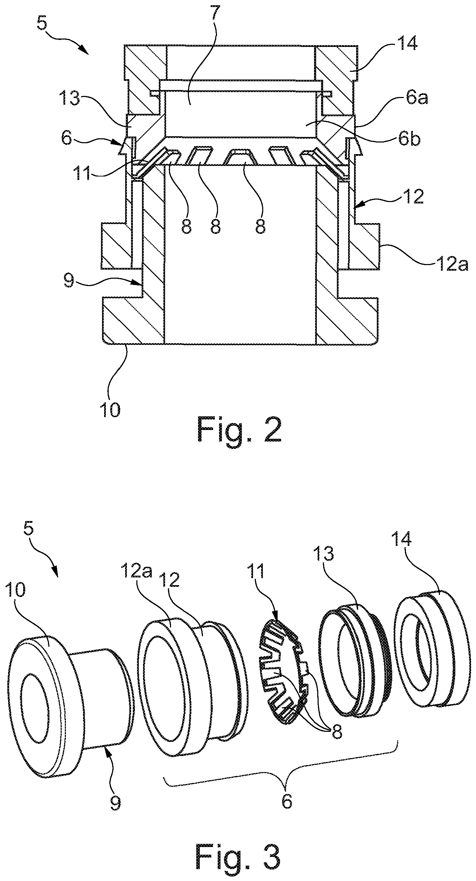

Particularly referring to Figure 2, the connector element 6 comprises a first portion 12 partially emerging out of the socket 5 and having an abutment flange 12a. The connector element 6 further comprises a second portion 13 that is entirely inserted in the seat 4.

It is further worth noting that the connector element 6 comprises a an elastically deformable sealing ring 11. The aforementioned projections 8 are defined by the sealing ring 11. More in detail, the sealing member 11 is placed between the first portion 12 and the second portion 13 of the connector element 6.

It shall be noted that the sealing ring 11 can be switched between a grip configuration and a release configuration. In the grip configuration, the projections 8 project out of an inside perimeter of the connector element 6 to create an interference fit with the rod 1. In the release configuration, the sealing ring 11 is elastically deformed to move the projections 8 back outwards, in particularly out of the aforementioned inside perimeter of the connector element 6. Due to its elastic deformability, the sealing ring 11 can spontaneously move from the release configuration to the grip configuration.

According to the present invention, the connection means 5 comprise a release ring 9, particularly connected to the connector element 6. This ring 9 is at least partially located outside the socket 4 and is designed to be pressed by to user to release the rod 1.

In particular, the ring 9 contacts the sealing ring 11 and is configured to urge the sealing ring 11 from the grip configuration to the release configuration.

More in detail, in operation, the ring 9 is also arranged coaxially with the rod 1. In particular, the ring 9 rests against the connector element 6 inside the socket 4, and projects out of the socket 4 so be accessed by the user. For this purpose, the ring 9 has a flanged end 10 located entirely outside the socket 4.

Once the connector element 6 and the ring 9 have been locked inside the socket 4, the rod 1 will be connected by simply pressing it for the end 2 to be forced into the additional socket 7. Thus, the rod 1 is firmly retained by the action of the projections 8 of the sealing ring 11.

The rod 1 will be released by simply pressing upon the ring 9, thereby deforming the connector element 6, in particular the sealing ring 11, and disengaging the projections 8 from the end 2 of the rod 1. Therefore, the rod 1 may be easily pulled out of the additional socket 7.

Optionally, the connection means 5 may comprise a rubber member 14, operably placed at the bottom of the socket 4, which has the purpose of damping the loads exerted on the connector element 6 through the ring 9 and stabilizing the connector element 6 in the socket 4.

## Claims

1. A kit for fixing vehicle sunshields, comprising:
- a rod (1) having at least one end (2) and configured to allow a sunshield to slide thereon;
- a support (3) adapted to be fixed to an interior compartment of a vehicle and having at least one socket (4) configured to receive and firmly hold the end (2) of said rod (1);
- connection means (5) configured to be placed between said rod (1) and said socket (4) for locking said rod (1) in said socket by interference fit, wherein said connection means (5) comprise a connector element (6) configured to be arranged coaxial with said rod (1) at said end (2), the connector element (6) comprising:
- an inner surface (6b) configured to grip said rod (1) and hold it by interference fit, the inner surface (6b) having a plurality of projections (8);
- an elastically deformable sealing ring (11), said projections (8) being defined on said sealing ring (11);
**characterized in that** the sealing ring (11) can be switched between a grip configuration in which said projections (8) project out of an inside perimeter of said connector element (6) and a release configuration, in which the sealing ring (11) is elastically deformed to move said projections (8) back outwards.

2. A kit as claimed in the preceding claim, wherein said connector element (6) is adapted to be fixed to the interior of said socket (4).

3. A kit as claimed in claim 1 or 2, wherein said connection means (5) comprise a release ring (9) which is connected to the connector element (6) and is at least partially located outside said socket (4) to be pressed by a user.

4. A kit as claimed in claim 3, wherein said ring (9) contacts said sealing ring (11) and is configured to urge said sealing ring (11) from the grip configuration to the release configuration.

## Patentansprüche

1. Bausatz für die Befestigung von Fahrzeug-Sonnenblenden, umfassend:
- eine Stange (1) mit mindestens einem Ende (2), die so konfiguriert ist, dass eine Sonnenblende darauf gleiten kann;
- eine Halterung (3), die zur Befestigung in einem Innenraum eines Fahrzeugs geeignet ist und mindestens einen Sockel (4) aufweist, der zur Aufnahme und zum festen Halten des Endes (2) der Stange (1) konfiguriert ist;
- Verbindungsmittel (5), die so konfiguriert sind, dass sie zwischen der Stange (1) und dem Sockel (4) angeordnet werden, um die Stange (1) in dem Sockel durch Presspassung zu verriegeln, wobei die Verbindungsmittel (5) ein Verbinderelement (6) umfassen, das konfiguriert ist, um koaxial mit der Stange (1) an dem Ende (2) angeordnet zu werden, wobei das Verbinderelement (6) umfasst:
- eine Innenfläche (6b), die so konfiguriert ist, dass sie die Stange (1) ergreift und durch Presspassung hält, wobei die Innenfläche (6b) eine Vielzahl von Vorsprüngen (8) aufweist;
- einen elastisch verformbaren Dichtungsring (11), wobei die Vorsprünge (8) an dem Dichtungsring (11) definiert sind;
**dadurch gekennzeichnet, dass** der Dichtungsring (11) zwischen einer Griffkonfiguration, in der die Vorsprünge (8) aus einem Innenumfang des Verbinderelements (6) vorstehen, und einer Freigabekonfiguration, wobei der Dichtungsring (11) elastisch verformt wird, um die Vorsprünge (8) wieder nach außen zu bewegen, umgeschaltet werden kann.

2. Bausatz nach dem vorstehenden Anspruch, wobei das Verbinderelement (6) so ausgebildet ist, dass es im Inneren des Sockels (4) befestigt werden kann.

3. Bausatz nach Anspruch 1 oder 2, wobei die Verbindungsmittel (5) einen Freigabering (9) umfassen, der mit dem Verbinderelement (6) verbunden ist und mindestens teilweise außerhalb des Sockels (4) angeordnet ist, um von einem Benutzer gedrückt zu werden.

4. Bausatz nach Anspruch 3, wobei der Ring (9) den Dichtungsring (11) berührt und so konfiguriert ist, dass er den Dichtungsring (11) aus der Griffkonfiguration in die Freigabekonfiguration drückt.

## Revendications

1. Kit de fixation de pare-soleil de véhicule, comprenant :
- une tige (1) ayant au moins une extrémité (2) et configurée pour permettre à un pare-soleil de glisser dessus ;
- un support (3) adapté pour être fixé à un compartiment intérieur d'un véhicule et ayant au moins une douille (4) configurée pour recevoir et maintenir fermement l'extrémité (2) de ladite tige (1) ;
- des moyens de connexion (5) configurés pour être placés entre ladite tige (1) et ladite douille (4) pour verrouiller ladite tige (1) dans ladite douille par ajustement serré, dans lequel lesdits moyens de connexion (5) comprennent un élément de connexion (6) configuré pour être disposé coaxialement avec ladite tige (1) au niveau de ladite extrémité (2), l'élément de connexion (6) comprenant :
- une surface intérieure (6b) configurée pour saisir ladite tige (1) et la maintenir par ajustement serré, la surface intérieure (6b) présentant une pluralité de saillies (8) ;
- une bague d'étanchéité (11) élastiquement déformable, lesdites saillies (8) étant définies sur ladite bague d'étanchéité (11) ;
**caractérisé en ce que** la bague d'étanchéité (11) peut être commutée entre une configuration de préhension dans laquelle lesdites saillies (8) font saillie hors d'un périmètre intérieur dudit élément de connecteur (6) et une configuration de libération, dans laquelle la bague d'étanchéité (11) est déformée élastiquement pour ramener lesdites saillies (8) vers l'extérieur.

2. Kit selon la revendication précédente, dans lequel ledit élément connecteur (6) est adapté pour être fixé à l'intérieur de ladite douille (4).

3. Kit selon la revendication 1 ou 2, dans lequel lesdits moyens de connexion (5) comprennent une bague de libération (9) qui est reliée à l'élément de connexion (6) et qui est au moins partiellement située à l'extérieur de ladite douille (4) pour être pressée par un utilisateur.

4. Kit selon la revendication 3, dans lequel ladite bague (9) entre en contact avec ladite bague d'étanchéité (11) et est configurée pour pousser ladite bague d'étanchéité (11) de la configuration de préhension à la configuration de libération.
